# EUROPÄISCHE PATENTSCHRIFT

(11) **EP 0 796 420 B1**
(45) Veröffentlichungstag und Bekanntmachung des Hinweises auf die Patenterteilung: **14.04.1999**
(21) Anmeldenummer: 95943163.6
(22) Anmeldetag: 07.12.1995
(51) Int. Cl.: G01C 15/00

(54) **VERFAHREN UND VORRICHTUNG ZUM VERMESSEN UND MARKIEREN**
SURVEYING AND MARKING DEVICE
PROCEDE ET DISPOSITIF D'ARPENTAGE ET DE MARQUAGE

(30) Priorität: 07.12.1994 DE 4443413
(43) Veröffentlichungstag der Anmeldung: 24.09.1997
(73) Patentinhaber: Schiele, Josef, 86698 Oberndorf (DE); Perz, Raimund, 86163 Augsburg (DE); Weigel, Hannes, 86159 Augsburg (DE)
(72) Erfinder: PERZ, Raimund, D-86163 Augsburg (DE); WEIGEL, Hannes, D-86159 Augsburg (DE)
(74) Vertreter: Rapp, Bertram, Dr.
(86) Internationale Anmeldenummer: EP9504804
(87) Internationale Veröffentlichungsnummer: WO9618083

(56) Entgegenhaltungen:
- EP-A- 0 465 239
- WO-A-89/10538
- WO-A-94/11700

## Beschreibung

Die Erfindung betrifft ein Verfahren und eine Vorrichtung zum Vermessen und Markieren an distanzierten Linien, Flächen oder in zumindest teilweise geschlossenen Räumen.

Ein solches Verfahren nebst Vorrichtung zeigt die EP-A-0 465 239. Sie befaßt sich mit dem Markieren von Bohrlöchern für Sprengladungen an der Arbeitsfläche eines Tunnels unter Zuhilfenahme eines mit Laserstrahlen arbeitenden Meß- und Markiersystems. Dieses System verlangt ein exaktes Einrichten und Nivellieren mit bekannten oder ermittelten absoluten Ortskoordinaten. Die Lage und Ausrichtung der Arbeitsfläche wird nicht direkt vermessen. Vielmehr wird mit einem einzelnen Laser-Meßstrahl eine von mehreren Reflektoren gebildete Referenzfläche gemessen, die sich mit Abstand vor der Arbeitsfläche befindet. Die Reflektoren haben bekannte Ortskoordinaten. Anschließend wird noch eine Abstandsmessung zu einem einzelnen Punkt der Arbeitsfläche durchgeführt. Mit den Meßdaten wird eine separate Laser-Markiervorrichtung angesteuert, die das Bohrlochmuster auf die Arbeitsfläche projeziert. Bei dieser Vorgehensweise können Lagefehler der Arbeitsfläche nicht ermittelt und bei der Projektion der Bohrlochmarkierungen nicht berücksichtigt werden. Die Genauigkeit des Systems ist bedingt durch den speziellen Anwendungsbereich relativ gering.

Aus der WO-A-89 10 538 ist ein Verfahren und eine Vorrichtung zur Vermessung von geschlossenen Räumen bekannt, bei denen ein oder mehrere relevante Raumpunkte vermessen werden. Aus der Lage bzw. den Koordinaten wird dann die Ist-Lage der Raumflächen berechnet. Dabei können auch Flächenfehler ignoriert und Flächen geglättet werden. Es findet eine absolute Vermessung statt, was ein exaktes Einrichten und Nivellieren des Meßgerätes erfordert. Die Meßdaten und die daraus berechnete Raumgeometrie werden angezeigt. Eine Weiterverarbeitung der Meßdaten für ein nachfolgendes Markieren von Konstruktionspunkten etc. findet nicht statt.

Die WO-A-94 11 700 lehrt die konstruktive Ausgestaltung eines mit Laserstrahl und Rechnerunterstützung arbeitenden Theodoliten für allgemeine Vermessungsaufgaben. Eine Markierfunktion ist nicht vorhanden.

Es ist Aufgabe der vorliegenden Erfindung, ein einfacheres Verfahren und eine hierfür geeignete Vorrichtung aufzuzeigen.

Die Erfindung löst diese Aufgabe mit den Merkmalen im unabhängigen Verfahrens- und Vorrichtungsanspruch. Mit dem erfindungsgemäßen Verfahren kann die Vermessung und Markierung in einem Arbeitsgang erfolgen. Es ist auch nur noch eine Relativvermessung erforderlich, weil Vermessung und Markierung vorzugsweise vom selben Bezugsort aus vorgenommen werden. Der Bezugsort kann allerdings auch wechseln, wenn bei der Neupositionerung die gleichen realen Raumpunkte wie beim erstmaligen Aufstellen angemessen werden und eine Koordinatentransformation durchgeführt wird. Ein Einrichten und Nivellieren des Meßgerätes kann entfallen.

Mit dem erfindungsgemäßen Verfahren und der dazugehörigen Vorrichtung können beliebige distanzierte Linien und Flächen sowie zumindest teilweise von Wänden umschlossene Räume vermessen werden. Der Einsatz ist sowohl im Freien wie auch in geschlossenen Räumen möglich.

Der apparative und verfahrenstechnische Aufwand ist sehr gering. Für die Bedienung genügt eine einzige Person. Das Vermessen und Markieren kann sehr schnell durchgeführt werden.

Besondere Fachkenntnisse im Vermessungswesen sind nicht erforderlich. Wenn die Auswerteeinheit der Meß- und Markiervorrichtung mit einem Mikrocomputer ausgerüstet ist, kann dieser sämtliche anfallenden Berechnungen durchführen und an der Anzeige die zum Anfahren der gewünschten Markierpunkte erforderlichen Winkel angeben oder sogar über Antriebe selbsttätig ansteuern. Der Mikrocomputer enthält ein Basisprogramm zur Ermittlung der vorzugsweise polaren Koordinaten der Raum- und Markierpunkte. Mit diesem Programm können auch aus den gemessenen Raumpunkten die gewünschten Linien, Flächen und Räume berechnet werden.

Die gemessenen realen Raumpunkte bilden Stützpunkte, über die ein mathematisches räumliches Modell berechnet werden kann, das ein Abbild des realen Raums darstellt. Dieses virtuelle Modell kann idealisiert werden, was z.B. zur Ermittlung und Korrektur von Raumfehlern vorteilhaft ist. In dem Modell kann die Lage von gesuchten oder vorgegebenen Konstruktions- oder Markierpunkten bestimmt werden und dann in geeigneter Weise, gegebenenfalls mit einer Fehleranzeige und/oder Fehlerkorrektur an den Objekten des realen Raums markiert werden. Dies läßt eine optimierbare Einpassung und Montage von Konstruktionen in realen fehlerbehafteten Räumen zu. Das virtuelle idealisierte Modell der Linien, Flächen oder Räume wird relativ zum Bezugsort dargestellt. Es kann in verschiedener Weise an den realen Raum angepaßt z.B. einbeschrieben werden.

In geeigneten implementierten Programmmodulen oder über Programmierschnittstellen zu anderen Zeichen- oder Konstruktionsprogrammen lassen sich spezielle Berechnungen zur Ermittlung der Konstruktions- oder Markierpunkte bzw. der von den Markierpunkten gebildeten Linien oder Flächen durchführen. Dabei können Montagevorgaben, Optimierungsroutinen etc. implementiert sein.

Von besonderem Vorteil sind das Verfahren und die Meß- und Markiervorrichtung für das Baugewerbe, insbesondere Architekten, Ingenieure und Handwerker. So können z. B. für die Montage von abgehängten Decken, eingezogenen Zwischenwänden etc. die Vermessungs- und Markierarbeiten vom Architekten, Ingenieur oder Handwerksmeister durchgeführt werden. Für die Montagearbeiten, die sich an den bereits vorhandenen Markierungen orientieren, sind dann keine besonders ausgebildeten Fachkräfte mehr erforderlich. Darüberhinaus gibt es beliebige andere Einsatzbereiche im Maschinenbau oder sonstigen Bereichen.

Über die Programmierschnittstelle kann z.B. an der Baustelle direkt auf die Planvorgaben in einem CAD-Programm oder dgl. des Architekten oder Bauingenieurs zugegriffen werden. Hierbei kann auch eine Rückkopplung in das CAD-Programm und eine Anpassung dortiger anderer Planvorgaben an die reale Baustruktur erfolgen.

Die Meß- und Markiervorrichtung kann unterschiedlich ausgebildet sein. In der bevorzugten Ausführungsform kommt ein Laserdistanzmeßgerät zum Einsatz, das mit einem optisch sichtbaren Laserstrahl sowohl ein Anvisieren und Vermessen der aufzunehmenden Raumpunkte wie auch ein Anvisieren der Markierpunkte gestattet. In einer besonders optimierten Ausführungsform werden die zu vermessenden Raumpunkte von Hand angesteuert, wobei die Markierpunkte anschließend aber maschinell und selbsttätig von der Meß- und Markiervorrichtung angefahren werden.

Bei dem erfindungsgemäßen Verfahren, das auf einem Relativbezug zwischen Vermessung und Markierung basiert, können aber auch absolute Vermessungen und Markierungen durchgeführt werden. Hierfür kann eine System-Nivellierung durchgeführt werden, die das mathematische Modell in Beziehung zu den tatsächlichen Richtungen im Raum setzt. Dadurch können z.B. Lote im Raum gefällt werden und Horizontalrisse oder dgl. andere absolute Raumrichtungen markiert werden.

In den abhängigen Ansprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Meß- und Markiervorrichtung in perspektivischer Darstellung,
- Figur 2:: einen Schemaplan der Signalflüsse,
- Figur 3:: ein Koordinatensystem zur Ermittlung der Raum- und Markierpunkte,
- Figur 4:: eine Gegenüberstellung des realen Raums und eines idealisierten mathematischen Modells,
- Figur 5:: verschiedene Anpassungsmöglichkeiten des idealisierten mathematischen Modells an den realen Raum und
- Figur 6:: Verschiedene Markierungsmöglichkeiten an einer realen Fläche bei Abweichungen von Soll- und Istlage eines Markierpunkts.

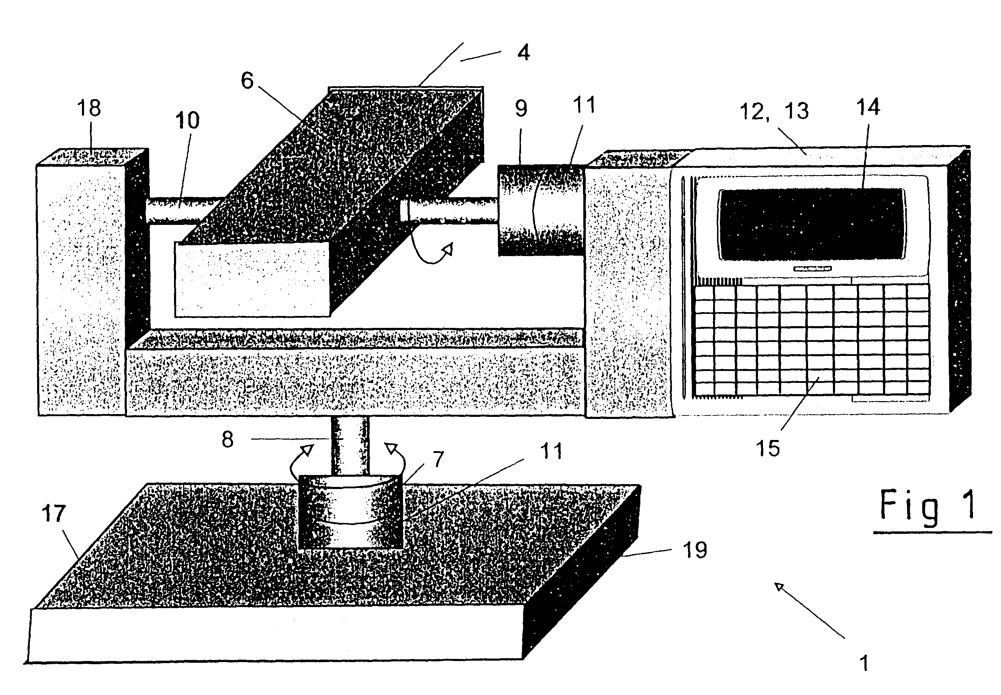

Figur 1 zeigt eine Meß- und Markiervorrichtung, die im wesentlichen aus einem Gestell (17), einem kardanisch gelagerten Laserdistanzmeßgerät (6), zwei Winkelmessern (7,9) und einer Auswerteeinheit (12) besteht. Das Laserdistanzmeßgerät (6) sendet einen Laserstrahl (4) aus, über den zum einen Entfernungen von Punkten gemessen werden können, die mit dem optisch sichtbaren Laserstrahl (4) anvisiert werden. Der gleiche Laserstrahl (4) dient aber auch zur Markierung von Punkten an realen Objekten.

Die kardanische Lagerung des Laserdistanzmeßgerätes (6) wird von einer im wesentlichen vertikalen Drehachse (8) und einer orthogonal dazu verlaufenden horizontalen Schwenkachse (10) gebildet. Das Laserdistanzmeßgerät (6) ist am Schnittpunkt der beiden Achsen (8,10) angeordnet, wobei der Laserstrahl (4) durch diesen Schnittpunkt verläuft. Der Schnittpunkt wird als Bezugsort (3) bezeichnet.

Das Gestell (17) weist eine Bodenplatte (19) auf, die eine Aufstellung der Meß- und Markiervorrichtung auf einem geeigneten Untergrund, z. B. einem Stativ, erlaubt. Auf der Grundplatte (19) ist die vertikale Drehachse (8) angeordnet, die eine Gabel (18) trägt. Zwischen den Gabelenden verläuft die horizontale Schwenkachse (10), an der das Laserdistanzmeßgerät (6) montiert ist. Es empfiehlt sich, die Lagerung so auszubilden, daß Freiheitsgrade lediglich für eine Achsenrotation mit 360° für die Drehachse (8) und einem kleineren Neigungswinkel für die Schwenkachse (10) vorhanden sind.

Die Auswerteeinheit (12) ist im gezeigten Ausführungsbeispiel an der Gabel (18) befestigt. Sie kann aber auch an einer beliebigen anderen Stelle des Gestells (17) angeordnet sein. Alternativ ist auch eine externe oder mobile Auswerteeinheit (12) möglich.

An den beiden Achsen (8,10) ist jeweils ein Winkelmesser (7,9) angeordnet, der vorzugsweise als Absolutwertgeber ausgebildet ist. Alternativ kann es sich auch um einen referierbaren Relativgeber handeln. Beide Winkelmesser (7,9) besitzen eine hohe Auflösung und Meßgenauigkeit von z.B. 1/1000°.

Das Laserdistanzmeßgerät (6) und die beiden Winkelmesser (7,9) sind mit der Auswerteeinheit (12) verbunden. Die Verbindung kann über festverdrahtete Leitungen, aber auch drahtlos über Funk oder dergleichen erfolgen. Die Auswerteeinheit (12) besitzt vorzugsweise einen Mikrocomputer, der mit Daten- und Programmspeichern ausgerüstet ist. Die Auswerteeinheit (12) verfügt außerdem über eine Anzeige (14), z. B. einen mehrteiligen LCD-Bildschirm und eine Eingabeeinheit (15), die beispielsweise als Tastatur ausgebildet ist. Außerdem kann die Auswerteeinheit (12) über ein oder mehrere Schnittstellen (16) für einen externen Datenaustausch verfügen.

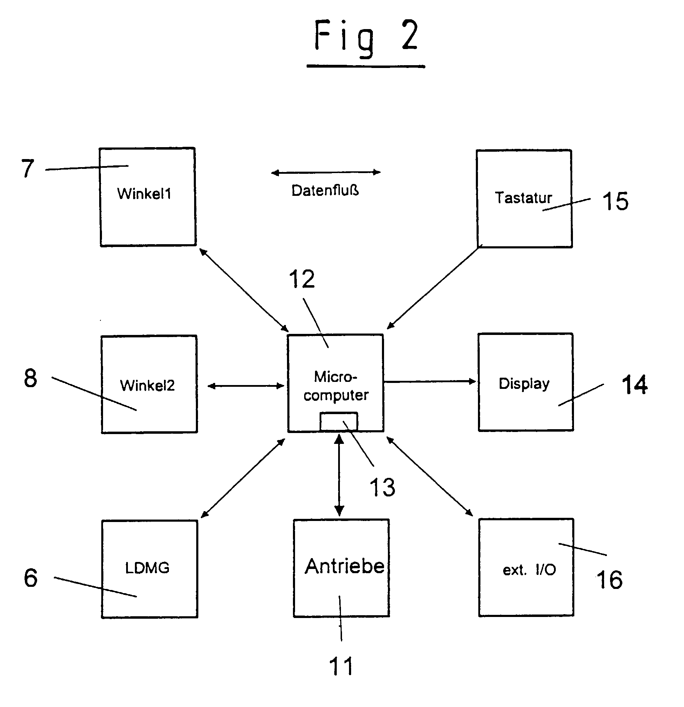

An den Achsen (8,10) können geeignete motorische Antriebe (11) angeordnet sein. Diese lassen sich von der Auswerteeinheit (12) fernbedienen. Zu diesem Zweck ist eine geeignete Steuerung (13) in die Auswerteeinheit (12) integriert. Figur 2 zeigt schematisch die verschiedenen Komponenten und die Datenflüsse.

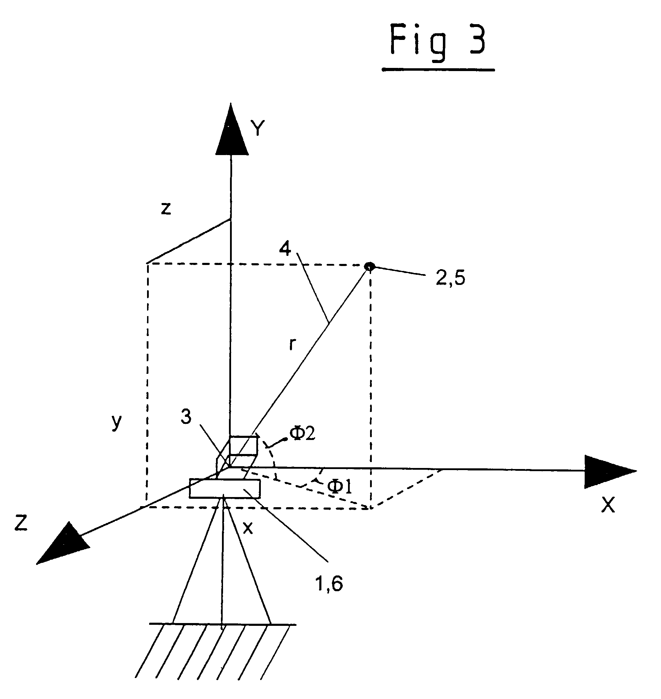

Die Meß- und Markiervorrichtung (1) dient zur meßtechnischen Erfassung und zur Markierung von Punkten im dreidimensionalen Raum. Figur 3 verdeutlicht die Beziehungen z.B. in einem polaren Koordinatensystem. Die Lage eines aufzunehmenden Raumpunktes (2) oder eines Markierpunktes (5) läßt sich vorzugsweise durch zwei orthogonale Raumwinkel Φ1 und Φ2 und die Entfernung zum Ursprung des Koordinatensystems beschreiben. Der Ursprung des Koordinatensystems ist der sogenannte Bezugsort (3), d.h. der Schnittpunkt der zwei Achsen (8,10) und des Strahls (4) im Laserdistanzmeßgerät (6). Es handelt sich somit um ein relatives, auf das Laserdistanzmeßgerät (6) bezogenes Koordinatensystem, in dem sowohl der Raumpunkt (2), wie auch der Markierpunkt (5) vermessen bzw. angezeigt werden. Figur 3 verdeutlicht dies schematisch durch die Andeutung eines Stativs mit der aufgebauten Meß- und Markiervorrichtung (1) bzw. dem Laserdistanzmeßgerätes (6).

Mit der Meß- und Markiervorrichtung (1) können distanzierte Linien, insbesondere Strecken, Flächen und durch mehrere Flächen gebildete, d.h. zumindest teilweise geschlossene Räume vermessen werden.

Die Vermessung erfolgt durch dreidimensionale meßtechnische Aufnahme von mindesten einem, vorzugsweise mehreren relevante Raumpunkten (2), die für die Beschreibung der Linie, Fläche oder Räumlichkeit charakteristisch sind. Zur Erfassung der räumlichen Lage von Linien oder Flächen empfiehlt es sich, jeweils den umgebenden Raum aufzunehmen. Bei einer Linie wird z.B. auch die Fläche oder Ebene erfaßt, in der die Linie liegt. Dazu werden zwei oder mehr auf der Linie liegende Raumpunkte (2) und mindestens ein Raumpunkt (2) auf der umgebenden Fläche aufgenommen.

Zur Erfassung der räumlichen Lage einer Fläche werden drei oder mehr Raumpunkte (2) auf dieser Fläche und mehrere Raumpunkte (2) von mindestens einer winklig daran angrenzenden zweiten oder weiteren Fläche aufgenommen. Die Raumpunkte (2) können auch auf den Schnittlinien der Flächen und insbesondere in Raumecken liegen. Bei der Vermessung eines Raumes werden alle seine Begrenzungsflächen aufgenommen. In der Praxis werden in der Regel vier bis acht oder mehr Raumpunkte (2) erfaßt.

Die polaren Koordinaten dieser Punkte (2,5) werden aus dem für die Raumwinkel Φ1 und Φ2 von den Achsen (8) und (10) gelieferten Meßwerten und der vom Laserdistanzmeßgerät (6) gemeldeten Entfernung in der Auswerteeinheit (12) ermittelt und zumindest zeitweise gespeichert. Die Lage der Punkte (2,5) wird vektoriell dargestellt. Vektoren können dabei auch in Abhängigkeit von anderen Vektoren dargestellt werden, wobei die Funktionen nicht unbedingt linearen Charakter haben müssen. Es lassen sich auch quadratische, kubische und andere Funktionen, z.B. Spline-Funktionen, formulieren.

Die Auswerteeinheit (12) bzw. der Mikrocomputer ist in der Lage, mit den gemessenen Raumpunkten (2) Berechnungen anzustellen. Dabei können verschiedene Rechenoperationen durchgeführt werden, wie Umrechnung von Punktkoordinaten (polar-kartesisch), Kombination von Anfangs- und Endpunkt zur Strecke, Kombination von drei Punkten oder einer Strecke und eines Punktes oder zwei Strecken zur Fläche, Berechnung von relativen Lagen (Punkt-Punkt, Punkt-Fläche, Punkt-Strecke, Strecke-Strecke, Strecke-Fläche, Fläche-Fläche), Translation (Verschiebung) und Transformation (Rotation, Skalierung etc.) von Punkten, Strecken und Flächen und Berechnung von Punkten durch Kombination von Strecken sowie Linien oder von Strecken durch Kombination von Flächen.

Die gemessenen Raumpunkte (2) werden zueinander in Bezug gesetzt. Aus zwei Raumpunkten (2) können in bekannter Weise vektoriell eine Strecke und aus drei Raumpunkten (2) eine Fläche berechnet werden. Auf diese Weise wird aus den relevanten Raumpunkten (2) ein dreidimensionales Abbild als mathematisches virtuelles Modell der realen aufgenommenen Linien, Flächen oder Räumlichkeiten erstellt. Das Abbild hat durch die vorerwähnte Aufnahme des umgebenden Raums für Linien oder Flächen jeweils eine Dimension oder Raumbeziehung mehr.

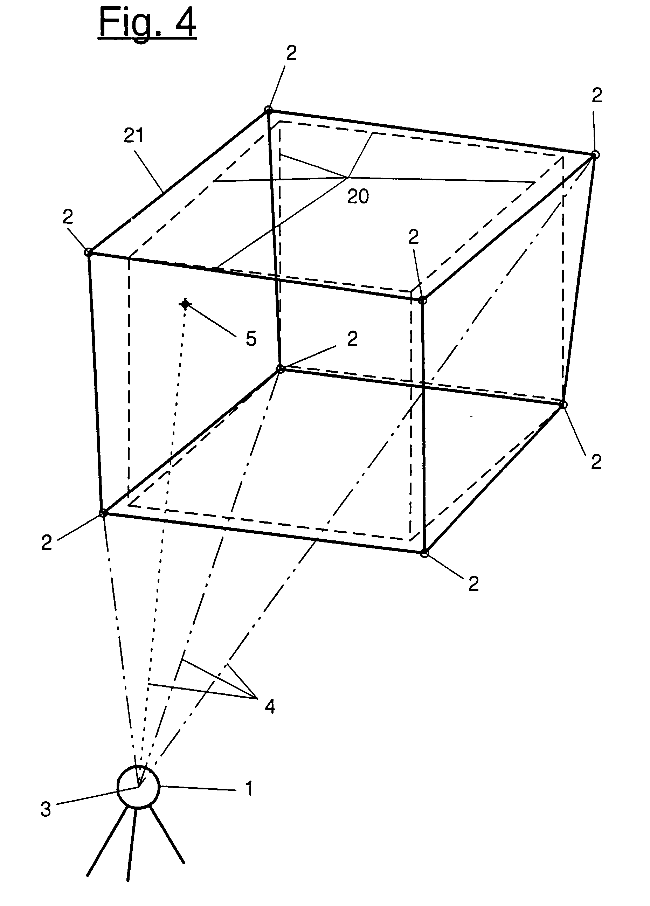

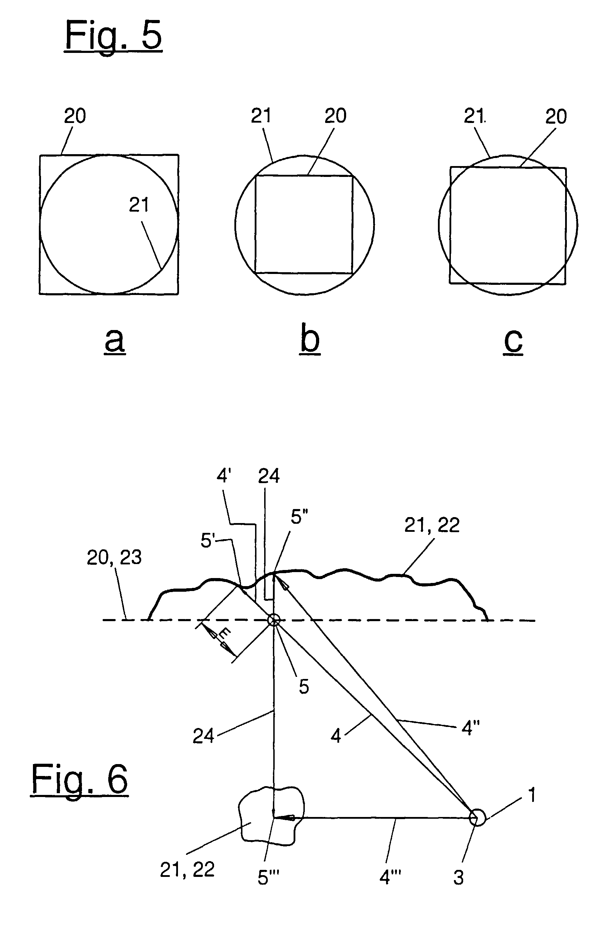

Figur 4 und 5 verdeutlichen das mathematische Modell (20) und seine Beziehung zum realen Raum (21). Das mathematische Modell (20) kann idealisiert werden. Es läßt sich in seiner Größe und seiner Lage verändern. Es kann an den realen Raum (21) in unterschiedlicher Weise angepaßt sein. Vorzugsweise stellen die gemessenen realen Raumpunkte (2) die äußeren Begrenzungen des mathematischen Modells (20) dar.

Figur 5 verdeutlicht eine Auswahl von drei verschiedenen Möglichkeiten a, b, c. Zur vereinfachten Darstellung wird der reale Raum (21) jeweils als Kreis und das mathematische Modell (20) als Quadrat dargestellt. Die Variante a zeigt die Umschreibung des realen Raums (21) durch das außenseitig umgebende mathematische Modell (20). Variante b verdeutlicht die Einbeschreibung des mathematischen Modells (20) in den realen Raum (21). In der Variante c erfolgt die Anpassung nach der sogenannten "best fit"-Methode.

Die Idealisierung des virtuellen mathematischen Modells (20) kann ebenfalls auf unterschiedliche Weise erfolgen. Zum Teil wird sie auch bereits durch die Auswahl der aufgenommenen relevanten Raumpunkte (2) bestimmt. Im Ausführungsbeispiel von Fig. 4 ist ein im wesentlichen kubischer realer Raum (21) dargestellt, der jedoch schiefe und verzogene Wände hat, wie dies in der Praxis häufig vorkommt. Das idealisierte mathematische Modell (20) hat hingegen eine genaue Kubusform mit rechteckigen Wänden, die senkrecht aufeinanderstehen. Es ist in der gezeigten Ausführungsform in den realen Raum (21) einbeschrieben.

Das mathematische Modell (20) ist auf die aufgenommenen realen Raumpunkte (2) bezogen und hat damit auch eine Beziehung zum Bezugsort (3). Die Stützpunkte des mathematischen Modells (20) müssen nicht auf den realen Raumpunkten (2) liegen, was allein schon wegen der Idealisierung nur teilweise möglich ist. Figur 4 verdeutlicht dies an der hinteren senkrechten Wand, an der nur die beiden unteren realen Raumpunkte (2) zugleich die Stützpunkte der entsprechenden Wand oder Fläche des idealisierten mathematischen Modells (20) sind. In allen anderen Ecken weichen die Stützpunkte des mathematischen Modells (20) von den realen Raumpunkten (2) ab. Die Stützpunkte des Modells (20) können aber auch vollkommen von den realen Raumpunkten (2) gelöst sein. Sie stehen aber in einem bekannten Bezug und haben zum Beispiel einen bestimmten wählbaren Abstand.

Das idealisierte mathematische beziehungsweise virtuelle Modell (20) stellt ein Objekt mit bestimmten vorgegebenen Eigenschaften, z.B. einen Kubus, dar. Wie vorerwähnt, läßt sich die Größe und Lage des Modells (20) verändern. Wird z.B. ein Stützpunkt verschoben, ändern sich auch die benachbarten Stützpunkte, so daß stets die Kubusform erhalten bleibt.

Das mathematische Modell (20) kann eine beliebige Form und Dimension haben. Der vorhandene reale Raum (21) kann auch durch mehrere zusammengesetzte mathematische Modelle (20) nachgebildet werden. Ein idealer Eisenbahntunnel wird z.B. durch die Kombination eines längshalbierten Zylinders auf einem Quader mit quadratischem Querschnitt idealisiert. Moderne Virtual-Reality-Systeme verwenden zur Darstellung nicht nur lineare Systeme (Drahtgittermodelle), sondern erzeugen Vektoren-Scharen, z.B. nach Spline-Funktionen. Ein auf Spline-Funktionen basierendes mathematisches Modell (20) kommt mit wesentlich weniger Stützpunkten als ein Drahtgittermodell aus und kann Zwischenwerte selbständig ausrechnen. Besonders hilfreich ist ein solches Modell (20), wenn gerundete Objekte idealisiert werden sollen.

Die Auswerteeinheit (12) hat zur Erstellung des idealisierten mathematischen Modells (20) ein geeignetes Programm. Zudem können Programmierschnittstellen zu geeigneten Zeichen- oder Konstruktionsprogrammen vorhanden sein, z.B. zu einem CAD-Programm eines Architekten oder Bauingenieurs.

Mit der Meß- und Markiervorrichtung können auf umgekehrtem Weg Markierpunkte (5) mit beliebiger Wiederholgenauigkeit im Rahmen der Meßauflösung wieder auf eine Fläche projeziert werden. Der optisch sichtbare Laserstrahl (4) erzeugt beim Auftreffen auf die Fläche, insbesondere die Wand eines Raumes, einen gut sichtbaren Leuchtpunkt. An dieser Stelle kann dann von Hand eine bleibende Markierung angebracht werden. Bei einer geeigneten Ausgestaltung lassen sich mit dem Laserdistanzmeßgerät (6) aber auch bleibende Markierungen auf der Fläche erzeugen, z. B. einbrennen.

Das Markieren erfolgt vorzugsweise vom gleichen Standort der Meß- und Markiervorrichtung und damit vom gleichen Bezugsort (3) aus. Der Standort bzw. die räumliche Lage des Bezugsorts (3) können allerdings auch gewechselt werden, wenn die Translation bekannt oder berechenbar ist. Hierzu kann z.B. bei der Neupositionierung der gleiche Raumbezug wie bei der vorherigen Aufstellung durch Anmessen der gleichen drei oder mehr fixen Raumpunkte bzw. der gleichen zwei fixen Raumpunkte in Verbindung mit einem Raumlot oder einer Horizontalen hergestellt werden. Durch Koordinatentransformation läßt sich dann die Verschiebung berechnen und das mathematische Modell (20) bzw. die Markierfunktion korrigieren.

Die Lage bzw. die Koordinaten der erforderlichen Markierpunkte (5) werden in der Auswerteeinheit (12) berechnet. Sie müssen nicht auf der aufgenommenen Linie, Fläche oder Räumlichkeit liegen, sondern können hierzu in einer beliebigen Beziehung stehen. Der Markierpunkt (5) kann z.B. der Endpunkt eines Lotes sein, das auf die aufgenommene Linie zu fällen ist.

Für die Berechnung der Konstruktions- oder Markierpunkte (5) werden von Hand über die Tastatur (15) oder eine Schnittstelle (16) die erforderlichen Daten eingegeben. Diese Daten können z.B. abzutragende Entfernungen oder Winkel von bestimmten Bezugslinien oder -punkten der Fläche oder des Raumes sein. Alternativ können die Daten aber auch bereits in einem Speicher in der Auswerteeinheit (12) abgelegt sein oder als fertige oder noch zu berechnende bzw. anzupassende Konstruktion über die Programmierschnittstelle(n) eingespielt werden.

Zum Anfahren des rechnerisch ermittelten Markierpunktes (5) werden die Raumwinkel Φ 1 und Φ 2 nach Größe und Richtung sowie die erforderliche Strahl-Distanz am Display (14) angezeigt. Es können aber auch die von der momentanen Stellung des Laserdistanzmeßgerätes (6) bis zum Markierpunkt (5) zurückzulegenden Winkel und die Entfernungsdifferenz angegeben werden. Über die Winkelmesser (7,9) wird die aktuelle Winkelstellung ständig gemessen und kann auch angezeigt. Der Markierpunkt (5) ist erreicht, wenn alle Abweichungen im Rahmen der Meßgenauigkeit zu 0 werden.

Zum Anvisieren und Vermessen der relevanten Raumpunkte (2) wird das Laserdistanzmeßgerät (6) von Hand über die Achsen (8,10) gedreht. Das Anfahren der Markierpunkte (5) kann ebenfalls von Hand erfolgen. Bei der Anordnung von fernbedienbaren Antrieben (11) kann die Auswerteeinheit (12) über die Steuerung (13) die Markierpunkte (5) auch selbständig anfahren.

Die Berechnung und Markierung der Konstruktions- oder Markierpunkte (5) erfolgt im mathematischen Modell (20). Wenn der reale Raum (21) wenig fehlerbehaftet ist, deckt er sich im wesentlichen mit dem mathematischen Modell (20), wobei die Markierpunkte (5) im mathematischen Modell (20) und im realen Raum (21) innerhalb der tolerierbaren Genauigkeit zusammenfallen.

Bei größeren Raumfehlern müssen diese beim Setzen und Anzeigen der Markierpunkte (5) an der realen Fläche berücksichtigt werden.

Figur 6 zeigt hierzu eine Gestaltungsmöglichkeit. Die Meß- und Markiervorrichtung (1) mißt auch beim Markieren die Entfernung vom Bezugsort (3) bis zum Auftreffpunkt des Strahls (4) an der realen Fläche (22). Liegt wie in Figur 6 die reale Fläche (22) beispielsweise hinter der zugehörigen Grenzfläche (23) des mathematischen Modells (20), wird diese Abweichung als Längenfehler E festgestellt. Liegt der Längenfehler E innerhalb einer im Programm vorgebbaren Toleranz, kann der Auftreffpunkt (5') des Strahls (4) als Markierpunkt (5) herangezogen werden.

Ist der Längenfehler E zu groß, können Korrekturmaßnahmen ergriffen werden. Hierfür gibt es unterschiedliche Möglichkeiten, die unter anderem auch von der Aufgabenstellung und dem Einsatzgebiet abhängen. Figur 6 zeigt eine Variante, die eine manuelle, aber auch automatische Korrektur mit der Meß- und Markiervorrichtung (1) zuläßt.

In diesem Fall wird vom errechneten Konstruktions- oder Markierpunkt (5) auf der Grenzfläche (23) das Lot auf die Grenzfläche (23) gefällt. Dies kann nach zwei entgegengesetzten Richtungen geschehen, d.h. zu der der Grenzfläche (23) unmittelbar benachbarten realen Fläche (22) oder zu einer im realen Raum (21) gegenüberliegenden, anderen realen Fläche (22). Das Lot wird in Figur 6 als Projektion (24) dargestellt. Der gesuchte reale Markierpunkt (5", 5"') ist der Auftreffpunkt der Projektion (24) auf der jeweils zugehörigen realen Fläche (22).

In Abwandlung des gezeigten Beispiels kann die Projektion (24) statt des Lotes auch eine beliebige andere wählbare Vorzugsrichtung haben. Das kann z.B. eine Richtungsparallelität zu einer angrenzenden Wand oder einer Fluchtlinie im realen Raum (21) sein.

Die realen Markierpunkte (5",5"') werden durch Drehen des Laserdistanzmeßgerätes (6) mit dem Strahl (4) entlang der Projektionen (24) gesucht. Für jeden Punkt auf dem Projektionsstrahl (24) sind Richtung und Abstand gegenüber dem Bezugsort (3) bekannt. Bei der Bewegung des Laserdistanzmeßgerätes wird die tatsächlich gemessene Strahllänge mit dieser bekannten Vorgabe verglichen. Die realen Markierpunkte (5",5"') sind erreicht, wenn die zugehörigen Strahlen (4",4"') nach Richtung und Länge mit der Vorgabe übereinstimmen.

Ein praktischer Anwendungsfall ist z. B. die Errichtung einer Trennwand in einem größeren Raum. Die Trennwand besteht aus einer Gipskartonwand auf einer Metallunterkonstruktion. Für die Montage sind eine Reihe von Bohrlöchern in den Wänden, der Decke und dem Boden erforderlich. Diese Bohrlöcher stellen die gewünschten Markierpunkte dar. Der Raum ist noch nicht vermessen, weshalb man die tatsächlichen Maße zur Bestellung des Systems benötigt. Zu diesem Zweck wird die Meß- und Markiervorrichtung (1) auf einem Stativ montiert und so inmitten des zu vermessenden Raumes aufgestellt, daß mit dem Laserstrahl (4) alle auszumessenden und zu markierenden Punkte erreichbar sind. Eine Nivellierung des Gerätes selbst ist nicht notwendig. Es sollte jedoch während des Meß- und Markiervorganges gewährleistet sein, daß die Meß- und Markiervorrichtung ihre Position im Raum, d.h. den Bezugsort (3), nicht unbemerkt ändert.

Mit der Meß- und Markiervorrichtung ist allerdings eine System-Nivellierung, d.h. ein Bezug für die mathematischen Raummodelle auf die tatsächlichen Raumrichtungen, insbesondere die Waagerechte oder Senkrechte möglich, ohne daß dazu das Gerät selbst in der Waagerechten ausgerichtet werden muß. Die System-Nivellierung erfolgt an anmeßbaren externen Richtungsvorgaben. Durch die Möglichkeit, relative Lagen zu bestimmen, kann jede Strecke oder Ebene relativ zu diesem Lot bestimmt werden.

Dazu werden z.B. zwei extern an einer Raumecke angetragene, waagerechte, höhenversetzte und im Winkel zueinander stehende Strecken, z. B. zwei Wasserwaagen über Eck, mit ihrem Anfangs- und Endpunkt abgemessen und gespeichert. Aus diesen Strecken lassen sich zwei zueinander parallele Ebenen errechnen, in der diese Stecken liegen. Eine Strecke, die auf beiden Ebenen senkrecht steht, stellt ein Lot im Raum dar.

Alternativ kann man auch ein Senkblei oder Lot frei pendelbar im Raum aufhängen und an mindestens zwei Punkten anmessen. Hieraus läßt sich dann direkt die Senkrechte im realen Raum (21) bestimmen und das mathematische Modell (20) danach ausrichten. Grundsätzlich genügen für einen absoluten Bezug des mathematischen Modells (20) ein Lot bzw. eine Horizontale und zwei fixe Raumpunkte (2) oder drei fixe Raumpunkte (2).

Mit dem Laserdistanzmeßgerät (6) werden nach der vorerwähnten System-Nivellierung die relevanten Raumpunkte (2), z.B. die Eckpunkte der verschiedenen Wände über den Laserstrahl (4) angefahren, gemessen und auf Knopfdruck gespeichert. Dabei können auch mehrere Zwischenpunkte an den Wandkanten aufgenommen und gespeichert werden. Die aufgenommenen Wände lassen sich als Objekte abspeichern und benennen. Die Raumflächen sind nach Lage und Größe vermessen, woraus sich dann die erforderlichen Abmessungen für die Metallunterkonstruktion berechnen lassen.

Dann werden die erforderlichen Wandmaße für Lage, Länge, Höhe und Abstand der Ständer der Metallunterkonstruktion in die Auswerteeinheit (12) eingegeben. Diese berechnet hieraus im mathematischen Modell (20) die erforderlichen Markierpunkte (5) und zeigt diese bzw. die bis zu deren Erreichen zurückzulegenden Winkel und den erforderlichen Abstand an. Das mathematischen Modell (20) kann dabei für Einpassungen oder dgl. verschoben oder in sonstiger Weise verändert werden. Beispielsweise können damit vorgegebene Konstruktions-Rastermaße eingemittelt oder Verschnitte optimiert werden.

Die Markierpunkte (5) werden nacheinander angefahren, wobei an den realen Wänden (22) bzw. der Decke und dem Boden des Raumes bleibende Markierungen durch Fahrpunkte, Hammerschläge oder dergleichen angebracht werden.

Auf die gleiche Weise lassen sich z.B. auch Rastermaße für eine abgehängte Decke markieren. Hierbei kann über ein Programm im Mikrocomputer (12) das optimale Rastermaß nach der ermittelten Größe und Lage der Deckenfläche selbsttätig berechnet und gegebenenfalls auch optimiert werden.

Ein weiterer Anwendungsfall sind Wandverkleidungen an schiefen Wänden. Wie in Figur (6) erläutert, werden lokale Fehler der realen Wandfläche (21) festgestellt und beim Markieren manuell oder mit geeigneten Stellantrieben automatisch korrigiert. Dadurch werden beim Anbringen der Konstruktion an der realen Wand Verzüge, Verwerfungen oder sonstige Fehler vermieden. Wird bei der Aufnahme der relevanten Raumpunkte (2) eine zu große Schieflage der realen Wand festgestellt, kann anstelle der vorgesehenen Verkleidung auf eine Ständerwand übergegangen werden, die einen Schiefenausgleich ermöglicht.

Die Positionierung des mathematischen Modells (20) bezüglich der aufgenommenen Raumpunkte (2) kann von der anzubringenden Konstruktion abhängig gemacht werden. Muß zum Beispiel ein Lattengerüst auf einer Wand angebracht werden, wird das mathematische Modell (20) von vornherein mit seiner zugehörigen Grenzfläche um die Lattendicke von der betreffenden Wand bzw. den relevanten Raumpunkten (2) distanziert. Dementsprechend können beim Markieren die Strahlen (4) anstatt auf die Wand auf angehaltene Latten gerichtet werden. Dies erlaubt ein Positionieren und ein Ausrichten der Latten nach allen Richtungen bereits während des Markierens. Anstelle von Latten können auf diese Weise auch Distanzklötze oder dergleichen beim Markieren angebracht und ausgerichtet werden. Eine weitere Anwendungsmöglichkeit ist das Markieren von Fluchtpunkten an benachbarten Wänden, über die mittels Ausrichtschnüren oder Ausrichtlatten Wandfluchten für eine später erfolgende Montage angehalten werden können.

Ein weiterer Anwendungsfall ist zum Beispiel die Vermessung eines Tunnels anhand zweier Grundsteine. Die unnivelliert aufgestellte Meß- und Markiervorrichtung (1) wird anhand eines externen Lotes von der Horizontalen und der Senkrechten im realen Raum in Kenntnis gesetzt. Anschließend können zwei Grundsteine angepeilt werden, um das auf den Bezugsort (3) bezogene eigene Koordinatensystem der Meß- und Markiervorrichtung (1) in Bezug zur Vorgabe bzw. dem Bauplan setzen zu können. Über die Programmierschnittstelle kann dann von einer CAD-Software ein ideales Vorgabemodell mit den Vorgabestützpunkten in die Auswerteeinheit (12) überspielt werden. Die Auswerteeinheit (12) fragt dann diese Stützpunkte zur Anmessung als reale Raumpunkte (2) ab. Nach Erhalt dieser Punkte erstellt die Auswerteeinheit (12) ihr eigenes idealisiertes mathematisches Modell (20) des Tunnels, was z.B. durch Einbeschreibung geschieht. Damit können nun die Fehler des realen Tunnels im Bezug zum idealen Vorgabemodell festgestellt und auch markiert werden. Ferner können die Konstruktions- und Markierpunkte für Tunnelverkleidungen etc. an den Tunnelwänden markiert werden.

Mit der beschriebenen Meß- und Markiervorrichtung (1) werden Punkte markiert. Die Vorrichtung kann darüberhinaus auch zur Anzeige von Strecken an den realen Wänden herangezogen werden. Zu diesem Zweck kann sie mit einfachen Mitteln zum Kreisellaser umgerüstet werden. Dazu wird beispielsweise ein rotierend angetriebenes Prisma in den Strahlengang geklappt, das den Strahl (4) ablenkt und im Kreis rotieren läßt. Bei entsprechend schneller Prismenrotation erscheint der drehende Strahl (4) als Strich an der Wand. Über eine vorgesetzte verstellbare Blende läßt sich die sichtbare Strich- oder Streckenlänge begrenzen. Außerdem kann die Meß- und Markiervorrichtung (1) zur Anzeige beliebiger Winkellagen des Laserstrichs eine zusätzliche Achse, zum Beispiel eine orthogonale dritte Schwenkachse, aufweisen. Diese läßt sich z.B. durch eine Schwenkachse an der Grundplatte des Stativs realisieren. Für die Funktion der Strichanzeige werden zunächst mindestens zwei Markierpunkte (5) gesetzt, über die der gewünschte Strich erfolgen soll. Dann wird die Meß- und Markiervorrichtung derart verstellt, daß der sichtbare Laserstrich durch diese Markierpunkte geht.

Abwandlungen des beschriebenen Ausführungsbeispieles sind in verschiedener Weise möglich. Die Laserstrahlmessung ist lediglich das bevorzugte Ausführungsbeispiel. Der Markierstrahl kann auch aus einem anderen optisch sichtbaren Lichtstrahl oder dergleichen bestehen. Es ist auch möglich, den Markierstrahl erst beim Auftreffen auf einen Gegenstand durch Oberflächenreaktionen sichtbar zu machen. Der Meßstrahl muß an sich nicht optisch sichtbar sein. Die Entfernung des Raumpunktes kann vielmehr auf beliebige Weise gemessen werden, wobei der Raumpunkt sich über eine zusätzliche optische Einrichtung anvisieren läßt. Ferner müssen die Meß- und Markiereinheit nicht identisch und nicht zu einem Gerät kombiniert sein. Sich ergebende Lageabweichungen können rechnerisch als Offsets in der Auswerteeinheit gespeichert werden und bei Berechnungen berücksichtigt werden.

Variierbar ist auch die konstruktive Ausgestaltung der Meß- und Markiervorrichtung, insbesondere die kardanische Lagerung des Laserdistanzmeßgerätes (6) oder einer anderen Meß- und Markiereinheit. Zusätzliche Achsen mit der entsprechenden Meßeinheit sind grundsätzlich möglich, erhöhen aber den Rechenaufwand.

### BEZUGSZEICHENLISTE

- 1: Meß- und Markiervorrichtung
- 2: Raumpunkt
- 3: Bezugsort
- 4: Strahl
- 5: Markierpunkt, Auftreffpunkt
- 6: Laserdistanzmeßgerät
- 7: Winkelmesser
- 8: Drehachse, Rotation
- 9: Winkelmesser
- 10: Schwenkachse, Neigung
- 11: Antrieb
- 12: Auswerteeinheit, Mikrocomputer
- 13: Steuerung
- 14: Anzeige
- 15: Eingabeeinheit
- 16: Schnittstelle
- 17: Gestell
- 18: Gabel
- 19: Bodenplatte
- 20: mathematisches Modell
- 21: realer Raum
- 22: reale Fläche
- 23: Grenzfläche
- 24: Projektion

## Patentansprüche

1. Verfahren zum Vermessen und Markieren an distanzierten Linien, Flächen oder zumindest teilweise geschlossenen Räumen, wobei die Linien, Flächen oder Räume durch Aufnahme mindestens eines dort befindlichen realen Raumpunktes (2) vermessen werden und aus den realen Raumpunkten (2) ein idealisierbares, mathematisches, räumliches Modell (20) der Linien, Flächen oder Räume berechnet wird, in dem die Lage mindestens eines Konstruktions- oder Markierpunktes (5) bestimmt und mit einem Strahl (4) an den Linien oder Flächen markiert wird, **dadurch gekennzeichnet,** daß beim Markieren die Ist-Lage des Markierpunktes (5) gemessen, mit der Soll-Lage verglichen und Abweichungen angezeigt und/oder durch Projektionsänderung korrigiert werden.

2. Verfahren nach Anspruch 1, **dadurch gekennzeichnet,** daß die Projektion (24) von der Soll-Lage des Markierpunktes im mathematischen Modell in einer wählbaren Vorzugsrichtung zu der zugehörigen idealisierten Grenzfläche (23) auf die reale Linie oder Fläche (22) erfolgt.

3. Verfahren nach Anspruch 1 oder 2, **dadurch gekennzeichnet,** daß das mathematische Modell (20) veränderbar ist und in einem variablen Bezug zu den aufgenommenen Raumpunkten (2) steht.

4. Verfahren nach einem der voranstehenden Ansprüche, **dadurch gekennzeichnet,** daß das idealisierte mathematische Modell (20) durch Einbeschreibung, Umschreibung oder nach der "best fit"-Methode den Raumpunkten (2) angepaßt wird.

5. Verfahren nach einem der voranstehenden Ansprüche, **dadurch gekennzeichnet,** daß beim Vermessen von Linien die umgebende Fläche und beim Vermessen von Flächen mindestens eine winklig daran angrenzende Nachbarfläche aufgenommen werden.

6. Verfahren nach einem der voranstehenden Ansprüche, **dadurch gekennzeichnet**, daß das Vermessen und das Markieren vom gleichen Bezugsort (3) aus erfolgen.

7. Verfahren nach einem der voranstehenden Ansprüche, **dadurch gekennzeichnet,** daß die Entfernungsmessung und/oder das Markieren mit einem optisch sichtbaren Strahl (4), insbesondere einem Laserstrahl, vorgenommen werden.

8. Verfahren nach einem der voranstehenden Ansprüche, **dadurch gekennzeichnet,** daß das Vermessen und Markieren über zwei Raumwinkel und die Entfernung gegenüber dem Bezugsort (3) erfolgen, wobei der Bezugsort (3) den Fußpunkt eines relativen Koordinatensystems bildet, auf das das mathematische Modell bezogen ist.

9. Verfahren nach einem der voranstehenden Ansprüche, **dadurch gekennzeichnet,** daß die Entfernungsmessung und das Markieren gemeinsam in einer Meß- und Markiervorrichtung (1) erfolgen.

10. Verfahren nach einem der voranstehenden Ansprüche, **dadurch gekennzeichnet,** daß die Koordinaten der Raum- und Markierpunkte (2, 5) von einer computergestützten Auswerteeinheit (12) berechnet und angezeigt werden.

11. Verfahren nach einem der voranstehenden Ansprüche, **dadurch gekennzeichnet,** daß die Markierpunkte (5) selbsttätig angefahren werden.

12. Verfahren nach einem der voranstehenden Ansprüche, **dadurch gekennzeichnet,** daß zum System-Nivellieren ein oder mehrere externe Vorgaben für die Richtungen im realen Raum (21), insbesondere ein Senkblei oder zwei Wasserwaagen, gemessen und in Bezug zu den aufgenommenen Raumpunkten (2) gesetzt werden.

13. Vorrichtung zum Vermessen und Markieren an distanzierten Linien, Flächen oder in zumindest teilweise geschlossenen Räumen, wobei die Linien, Flächen oder Räume durch Aufnahme von ein oder mehreren dort befindlichen relevanten Raumpunkten (2) vermessen werden, indem die Meß- und Markiervorrichtung (1) eine Entfemungsmeßeinheit (6), eine Markiereinheit und eine integrierte oder zugeordnete Auswerteeinheit (12) mit einem Programm zur Erstellung eines idealisierbaren, mathematischen, räumlichen Modells (20) der Linien, Flächen oder Räume aufweist, **dadurch gekennzeichnet,** daß die Entfernungsmeßeinheit (6) und die Markiereinheit gleichachsig einen Strahl (4) aussenden und dreh- und schwenkbar gelagert sind, wobei an der Dreh- und Schwenkachse (8, 10) Winkelmesser (7, 9) angeordnet sind und die Auswerteeinheit (12) eine Anzeigevorrichtung (14) zur Anzeige von Abweichungen der Ist-Lage des Markierpunktes (5) von dessen Soll-Lage aufweist und/oder ein Programm zur Korrektur derartiger Abweichungen durch Projektionsänderung.

14. Vorrichtung nach Anspruch 13, **dadurch gekennzeichnet,** daß das Programm eine Schnittstelle für andere Konstruktions- und Zeichenprogramme aufweist.

15. Vorrichtung nach einem der Ansprüche 13 oder 14, **dadurch gekennzeichnet**, daß die Auswerteeinheit (12) einen Mikrocomputer mit Programm- und Datenspeichern, eine Anzeige (14) und eine Eingabeeinheit (15) aufweist.

16. Vorrichtung nach Anspruch 15, **dadurch gekennzeichnet,** daß der Mikrocomputer (12) ein oder mehrere Schnittstellen (16) zum externen Datenaustausch aufweist.

17. Vorrichtung nach einem der Ansprüche 13 bis 16, **dadurch gekennzeichnet,** daß die Entfernungsmeßeinheit und die Markiereinheit in einem Gerät kombiniert und als Laserdistanzmeßgerät (6) ausgebildet sind.

18. Vorrichtung nach einem der Ansprüche 13 bis 17, **dadurch gekennzeichnet,** daß der Strahl (4) durch den Schnittpunkt der Dreh- und Schwenkachse (8, 10) verläuft.

19. Vorrichtung nach einem der Ansprüche 13 bis 18, **dadurch gekennzeichnet,** daß an der Dreh- und Schwenkachse (8, 10) Antriebe (11) angeordnet und mit der Auswerteeinheit (12) verbunden sind.

20. Vorrichtung nach Anspruch 19, **dadurch gekennzeichnet,** daß die Auswerteeinheit (12) eine Steuerung für die Antriebe (11) aufweist.

## Claims

1. A method of surveying and marking remote lines, areas or at least partially closed spaces, where the lines, areas or spaces are surveyed through picking up at least one real point (2) lying there in the space and an idealizable mathematical spatial model (20) of the lines, areas or spaces is calculated from the real points (2) in space, in which the position of at least one construction or marking point (5) is determined and marked on the lines or areas by a beam (4), **characterized in that** during marking the actual position of the marking point (5) is measured and compared with the desired position and deviations are indicated and/or corrected by alteration of projection.

2. A method as in Claim1, **characterized in that** the projection (24) of the desired position of the marking point in the mathematical model is effected upon the real line or area in a discretionary preferred direction to the associated idealized boundary area (23).

3. A method as in Claim 1 or 2, **characterized in that** the mathematical model (20) is variable and lies in a variable reference to the picked-up point (2) in space.

4. A method as in one of the preceding Claims, **characterized in that** the idealized mathematical model (20) is adapted to the points (2) is space by inscribing or circumscribing or according the "best fit" method.

5. A method as in one of the preceding Claim, **characterized in that** in the surveying of lines the surrrounding area is picked up and in the surveying of areas at least one neighbouring area adjoining it at an angle.

6. A method as in one of the preceding Claims, **characterized in that** the surveying and the marking are effected from the same reference point (3).

7. A method as in one of the preceding Claims, **characterized in that** the distance measurement and/or the marking are performed with an optically visible beau (4), especially laser beam.

8. A method as in one of the preceding Claims, **characterized in that** the surveying and marking are effected over two solid angles and the distance with respect to the reference point (3), where the reference point (3) forms the foot of a relative system of coordinates upon which the mathematical model is based.

9. A method as in one of the preceding Claims, **characterized in that** the distance measurement and the marking are effected together in one measuring and marking device (1).

10. A method as in one of the preceding Claims, **characterized in that** the coordinates of the points in space and the marking points (2, 5) are calculated and indicated by a computer-supported evaluator unit (12).

11. A method as in one of the preceding Claims, **characterized in that** the marking points (5) are arrived at automatically.

12. A method as in one of the preceding Clains, **characterized in that** for the system levelling on or more external starts are measured for the directions in real space (21), especially a plumb bob or two spirit levels, and set in reference to the points (2) picked up in space.

13. A device for surveying and marking remote lines, areas or at least partially closed spaces, where the lines, areas or spaces are surveyed through picking up one or more relevant points (2) lying there in the space, by the measuring and marking device (1) exhibiting a distance measuring unit (6), a marker unit and an integrated or associated evaluator unit (12) having a programme for the production of an idealizable mathematical spatial model (20) of the lines, areas or spaces,
**characterized in that**
the distance measuring unit (0) and the marker unit emit a beam (4) on the same axis and are supported to be able to turn and swing, anglemeters (7, 9) being arranged on the axes of turn and swing (8, 10) and the evaluator unit (12) exhibit an indicator (14) for indicating deviations of the actual position of the marking-point (5) from its desired position and/or a programme for the correction of deviations of that kind by alteration of projection.

14. A device as in Claim 13, **characterised in that** the programme exhibits an interface for other construction and character programmes.

15. A device as in one of the Claims 13 or 14, **characterized in that** the evaluator unit (12) exhibits a microcomputer with programme and data stores, an indicator (14) and an input unit (16).

16. A device as in Claim 15, **characterized in that** the microcomputer (12) exhibits one or more interfaces (16) for the external exchange of data.

17. A device as in one of the Claims 13 to 16, **characterized in that** the distance measuring unit and the marker unit are combined in one apparatus and formed as a laser distance measuring apparatus (6).

18. A device as in one of the Claims 15 to 17, **characterized in that** the beam (4) runs through the intersection of the axes of turn and swing (8, 10).

19. A device as in one of the Claims 13 to 16, **characterized in that** drives (11) are arranged on the axes of turn and swing (8, 10) and connectd to the evaluator unit (12).

20. A device as in Claim 19, **characterized in that** the evaluator unit (12) exhibits a control for the drives (11).

## Revendications

1. Procédé de mesure et de marquage de lignes, de surfaces ou de volumes au moins partiellement fermés, situés à distance, les lignes, surfaces ou volumes étant mesurés par enregistrement d'au moins un point d'espace réel (2) qui y est situé et un modèle mathématique d'espace idéalisable (20) des lignes, surfaces ou volumes étant calculé à partir des points d'espace réels (2) en déterminant la position d'au moins un point de construction ou de marquage (5) et en la marquant sur les lignes ou surfaces au moyen d'un rayon (4), caractérisé en ce que, lors du marquage, la position réelle du point de marquage (5) est mesurée et comparée à la position de consigne et des écarts sont affichés et/ou corrigés par modification de projection.

2. Procédé suivant la revendication 1, caractérisé en ce que la projection (24) de la position de consigne du point de marquage dans le modèle mathématique a lieu sur la ligne ou surface réelle (22) dans une direction préférentielle pouvant être choisie vers la surface limite idéalisée (23) associée.

3. Procédé suivant la revendication 1 ou 2, caractérisé en ce que le modèle mathématique (20) est modifiable et est dans une relation variable avec les points d'espace (2) enregistrés.

4. Procédé suivant l'une des revendications précédentes, caractérisé en ce que le modèle mathématique idéalisé (20) est adapté aux points d'espace (2) par construction d'une figure inscrite dans une autre, par construction d'une figure circonscrite à une autre ou suivant la méthode "de la meilleure adaptation".

5. Procédé suivant l'une des revendications précédentes, caractérisé en ce que, dans le cas de la mesure de lignes, la surface les entourant est enregistrée et, dans le cas de la mesure de surfaces, au moins une surface voisine leur étant angulairement adjacente est enregistrée.

6. Procédé suivant l'une des revendications précédentes, caractérisé en ce que la mesure et le marquage ont lieu à partir d'un même emplacement de référence (3).

7. Procédé suivant l'une des revendications précédentes, caractérisé en ce que la mesure de distance et/ou le marquage sont effectués au moyen d'un rayon visible sur le plan optique (4), notamment un rayon laser.

8. Procédé suivant l'une des revendications précédentes, caractérisé en ce que la mesure et le marquage ont lieu au moyen de deux angles d'espace et de la distance par rapport à l'emplacement de référence (3), l'emplacement de référence (3) constituant l'origine d'un système de coordonnées relatives auquel le modèle mathématique est rapporté.

9. Procédé suivant l'une des revendications précédentes, caractérisé en ce que la mesure de distance et le marquage ont lieu en commun dans un dispositif de mesure et de marquage (1).

10. Procédé suivant l'une des revendications précédentes, caractérisé en ce que les coordonnées des points d'espace et points de marquage (2, 5) sont calculées et affichées par une unité d'analyse (12) assistée par ordinateur.

11. Procédé suivant l'une des revendications précédentes, caractérisé en ce que les points de marquage (5) sont approchés automatiquement.

12. Procédé suivant l'une des revendications précédentes, caractérisé en ce que, pour la mise de niveau du système, une ou plusieurs références extérieures concernant les directions dans le volume réel (21), notamment un fil à plomb ou deux niveaux à bulle, sont mesurées et fixées par rapport aux points d'espace (2) enregistrés.

13. Dispositif de mesure et de marquage sur des lignes, sur des surfaces ou dans des volumes fermés au moins partiellement, situés à distance, les lignes, surfaces ou volumes étant mesurés par enregistrement d'un ou plusieurs points d'espace (2) caractéristiques qui y sont situés, le dispositif de mesure et de marquage (1) comprenant une unité de mesure de distance (6), une unité de marquage et une unité d'analyse (12) intégrée ou associée comportant un programme de production d'un modèle mathématique d'espace idéalisable (20) des lignes, surfaces ou volumes, caractérisé en ce que l'unité de mesure de distance (6) et l'unité de marquage émettent suivant le même axe un rayon (4) et sont montées de façon à pouvoir tourner et pivoter, des dispositifs de mesure d'angle (7, 9) étant disposés sur l'axe de rotation et l'axe de pivotement (8, 10) et l'unité d'analyse (12) comportant un dispositif d'affichage (14), servant à afficher des écarts de la position réelle du point de marquage (5) par rapport à sa position de consigne, et/ou un programme servant à corriger de tels écarts par modification de projection.

14. Dispositif suivant la revendication 13, caractérisé en ce que le programme comporte une interface pour d'autres programmes de constructions et de dessin.

15. Dispositif suivant l'une des revendications 13 ou 14, caractérisé en ce que l'unité d'analyse (12) comprend un micro-ordinateur comportant des mémoires de programme et de données, un affichage (14) et une unité d'introduction de données (15).

16. Dispositif suivant la revendication 15, caractérisé en ce que le micro-ordinateur (12) comporte une ou plusieurs interfaces (16) pour l'échange extérieur de données.

17. Dispositif suivant l'une des revendications 13 à 16, caractérisé en ce que l'unité de mesure de distance et l'unité de marquage sont combinées dans un appareil et sont réalisées sous forme d'un appareil de mesure de distance laser (6).

18. Dispositif suivant l'une des revendications 13 à 17, caractérisé en ce que le rayon (4) passe par le point d'intersection des axes de rotation et de pivotement (8, 10).

19. Dispositif suivant l'une des revendications 13 à 18, caractérisé en ce que des moyens d'entraînement (11) sont disposés sur les axes de rotation et de pivotement (8, 10) et sont reliés à l'unité d'analyse (12).

20. Dispositif suivant la revendication 19, caractérisé en ce que l'unité d'analyse (12) comporte une commande pour les moyens d'entraînement (11).
